# FASCICULE DE BREVET EUROPEEN

(11) **EP 3 035 462 B1**
(45) Date de publication et mention de la délivrance du brevet: **21.02.2018**
(21) Numéro de dépôt: 15200132.7
(22) Date de dépôt: 15.12.2015
(51) Int. Cl.: H02G 3/08

(54) **BOÎTE DE CONNEXION ÉLECTRIQUE**
ELEKTRISCHE VERBINDUNGSDOSE
ELECTRICAL CONNECTION BOX

(30) Priorité: 15.12.2014 FR 1462412
(43) Date de publication de la demande: 22.06.2016
(73) Titulaire: Cooper Capri SAS, 41600 Nouan-le-Fuzelier (FR)
(72) Inventeur: GILLES, Johan, 41300 Salbris (FR)
(74) Mandataire: Gendron, Vincent Christian

(56) Documents cités:
- WO-A1-95/21774
- FR-A- 495 732
- US-A- 4 491 231

## Description

La présente invention concerne, d'une manière générale, les boîtes de connexion électrique, c'est-à-dire les boîtes de jonction/dérivation servant notamment à faire des dérivations pour pouvoir connecter des fils supplémentaires sur un réseau existant.

Elle concerne plus particulièrement une boîte de connexion électrique comprenant des parois latérales délimitant un volume interne destiné au raccordement de connecteurs électriques aptes à entrer dans la boîte au travers de passages ménagés dans les parois latérales, les parois latérales comprenant des premier et second éléments latéraux constitués chacun de deux parties de paroi à bords longitudinaux et transversaux articulées l'une par rapport à l'autre par une charnière le long de leur bord transversal adjacent, les bords transversaux libres des parties de paroi du premier élément latéral comportant des moyens d'accouplement adaptés à coopérer de manière démontable avec des moyens d'accouplement complémentaires ménagés sur les bords transversaux libres des parties de parois du second élément latéral, de façon à pouvoir assembler les premier et second éléments latéraux par les bords latéraux libres de leurs parties de paroi respectives.

Un tel dispositif est bien connu de l'homme du métier, notamment par l'exemple qu'en donne la boîte de dérivation, dite boîte pavillonnaire, vendue sous la référence CAP495889 par la société Capri.

Cette boîte de dérivation se présente donc sous la forme d'un ensemble de deux éléments latéraux constitués chacun de deux parties de parois articulées entre elles par leur bord transversal adjacent, ces éléments latéraux étant fournis détachés et sont destinés à être assemblés ultérieurement par l'utilisateur de façon à constituer les parois latérales de la boîte. Ainsi, une telle boîte fournie en kit présente l'avantage de permettre d'optimiser les coûts de transport des boîtes sur les lieux de distribution ou d'utilisation, en limitant le volume d'encombrement par rapport aux boîtes moulées d'une seule pièce, qui nécessitent de transporter du volume « vide ». Cependant, l'assemblage de la boîte est relativement complexe et par conséquent consommateur de temps, ce qui n'est pas souhaitable, en particulier dans le cadre d'une utilisation par des professionnels du bâtiment.

En effet, les deux éléments latéraux sont fournis détachés et nécessitent d'être préalablement pliés le long de leur charnière centrale de façon à ce que les parties de paroi respectives des deux éléments latéraux soient sensiblement orientées orthogonalement l'une à l'autre. Les deux éléments latéraux doivent alors être disposés en regard l'un de l'autre sur un plan de travail pour pouvoir être assemblés. Pour ce faire, les bords transversaux libres de leurs parties de paroi respectives comprennent des moyens d'accouplement permettant d'assembler les deux éléments latéraux avec coulissement par tenon et mortaise, selon une direction de coulissement de l'assemblage par tenon et mortaise parallèle aux bords transversaux. Cependant, dans cette configuration d'assemblage des deux éléments latéraux entre eux, l'équerrage de la boîte n'est pas assuré. En effet, les moyens d'assemblage avec coulissement par tenon et mortaise ne permettent pas de satisfaire à une exigence de solidarisation rigide car en particulier, ils autorisent un mouvement des deux éléments latéraux lorsque ces derniers sont soumis à un effort de flexion qui les fait pivoter l'un par rapport à l'autre. L'équerrage de la boîte doit alors être réalisé par l'intermédiaire d'un couvercle assemblé sur la boîte par clipsage, permettant de maintenir rigidement les parois de la boîte à l'équerrage. L'assemblage du couvercle est en outre relativement incommode dans la mesure où, au moment de l'assemblage, les parois de la boîte sur lesquelles le couvercle doit venir être verrouillé par clipsage, sont libres en pivotement le long de leurs bords transversaux, rendant malaisé le positionnement adéquat du couvercle. Un boitier en une pièce est décrit dans le document FR495732.

Il existe donc un besoin pour une boîte de connexion permettant d'optimiser le transport de telles boîtes, tout en étant facile et rapide à assembler.

A cette fin, la boîte de connexion électrique de l'invention, par ailleurs conforme à la définition générique qu'en donne le préambule ci-dessus, est essentiellement caractérisée en ce que les moyens d'accouplement sont prévus pour coopérer de façon à solidariser les premier et second éléments latéraux lorsque les parties de paroi respectives des premier et second éléments latéraux sont disposées avec leurs bords longitudinaux sensiblement alignés, et à verrouiller l'assemblage des premier et second éléments latéraux lorsque les parties de paroi respectives des premier et second éléments latéraux sont disposées avec leurs bords longitudinaux sensiblement orthogonaux de sorte à former une seule pièce rigide maintenue à l'équerrage.

Ainsi, grâce à cet agencement, les deux éléments latéraux destinés à être assemblés pour former la boîte peuvent être maintenus solidarisés à plat pour leur transport, ce qui est particulièrement favorable à une diminution des coûts de transport, puis ensuite, être aisément déployés en position finale dans laquelle ils sont verrouillés pour garantir l'équerrage de la boîte ainsi formée.

Avantageusement, les moyens d'accouplement sont adaptés pour guider la rotation des deux éléments latéraux autour d'un axe de rotation passant par leurs bords transversaux libres respectifs, depuis la position à plat vers la position à l'équerrage, lors du pivotement des parties de paroi respectives des deux éléments latéraux autour de leur charnière d'articulation.

Selon un mode de réalisation, les moyens d'accouplement comprennent, sur chacun des premier et second éléments latéraux, au moins un épaulement cylindrique qui fait saillie d'un des deux bords transversaux libres de l'élément latéral correspondant, et une portée cylindrique ménagée sur l'autre des deux bords transversaux libres de l'élément latéral correspondant, l'épaulement cylindrique de l'un des deux éléments latéraux étant apte à être inséré dans la portée cylindrique de l'autre des deux éléments latéraux pour assurer un couplage des deux éléments latéraux à plat et pour guider la rotation des deux éléments latéraux.

Avantageusement, les moyens d'accouplement comportent des moyens de verrouillage, par encliquetage élastique, aptes à s'encliqueter élastiquement lorsque la position à l'équerrage des premier et second éléments latéraux est atteinte, de sorte que les premier et second éléments latéraux sont bloqués dans cette position.

Selon un mode de réalisation, les moyens de verrouillage par encliquetage élastique comprennent, d'un côté de l'épaulement cylindrique, un ergot en saillie et, d'un côté de la portée cylindrique, une cavité de réception, l'ergot de l'un des deux éléments latéraux étant apte à être reçu dans la cavité de réception de l'autre des deux éléments latéraux.

De préférence, les parties de paroi respectives des éléments latéraux sont reliées entre elles par une zone de déformation formant charnière élastique venue d'une seule pièce avec les parties de paroi.

Avantageusement, les premier et second éléments latéraux constituent chacun une pièce monobloc venue de moulage en une matière plastique.

D'autres caractéristiques et avantages de l'invention ressortiront clairement de la description qui en est faite ci-après, à titre indicatif et nullement limitatif, en référence aux dessins annexés, dans lesquels:
- les Figures 1 et 2 illustrent une boîte de connexion conforme à l'invention respectivement en vue de dessus et en vue de dessus en perspective, dans une configuration initiale destinée au transport de la boîte dans laquelle les bords longitudinaux des parties de paroi respectives des deux éléments latéraux sont sensiblement alignées, ces deux éléments latéraux étant maintenus solidaires entre eux ;
- la Figure 3 illustre une vue de détail des moyens d'accouplement agencés sur les bords transversaux libres des éléments latéraux et prévus pour coopérer deux à deux, dans la configuration initiale illustrée aux figures 1 et 2 ;
- les Figures 4 et 5 illustrent la boîte de connexion selon l'invention respectivement en vue de dessus et en vue de dessus en perspective, dans une configuration intermédiaire, en cours de déploiement, dans laquelle les deux éléments latéraux forment un angle de sensiblement 30° entre eux ;
- la Figure 6 illustre la vue de détail des moyens d'accouplement, dans la configuration intermédiaire illustrée aux figures 4 et 5 ;
- les Figures 7 et 8 illustrent la boîte de connexion selon l'invention respectivement en vue de dessus et en vue de dessus en perspective, dans une configuration finale, dite d'utilisation, dans laquelle la boîte est formée et maintenue à l'équerrage avec les bords longitudinaux des parties de paroi respectives des deux éléments latéraux disposés orthogonalement les uns par rapport aux autres.
- la Figure 9 illustre la vue de détail des moyens d'accouplement, dans la configuration finale illustrée aux figures 6 et 7.

Sur les différentes figures, les éléments identiques ou similaires portent les mêmes numéros de références. Leur description n'est donc pas reprise systématiquement.

La boîte 1 de connexion électrique selon l'invention est constituée de deux éléments latéraux 10 et 20 formant chacun une pièce monobloc venue de moulage en une matière plastique. Chacun des deux éléments latéraux 10 et 20 est constitué de deux parties de paroi, respectivement 11, 12 et 21, 22, de forme générale rectangulaire, délimitées chacune par des bords longitudinaux et transversaux et articulées entre elles par une charnière d'articulation, respectivement 13 et 23, agencée le long de leur bord transversal adjacent, respectivement 14 et 15, et 24 et 25. Les charnières d'articulation 13 et 23 sont préférentiellement formées par une zone de déformation formant charnière élastique venue d'une seule pièce avec les parties de paroi respectives de chaque élément latéral et reliant leur bord transversal adjacent.

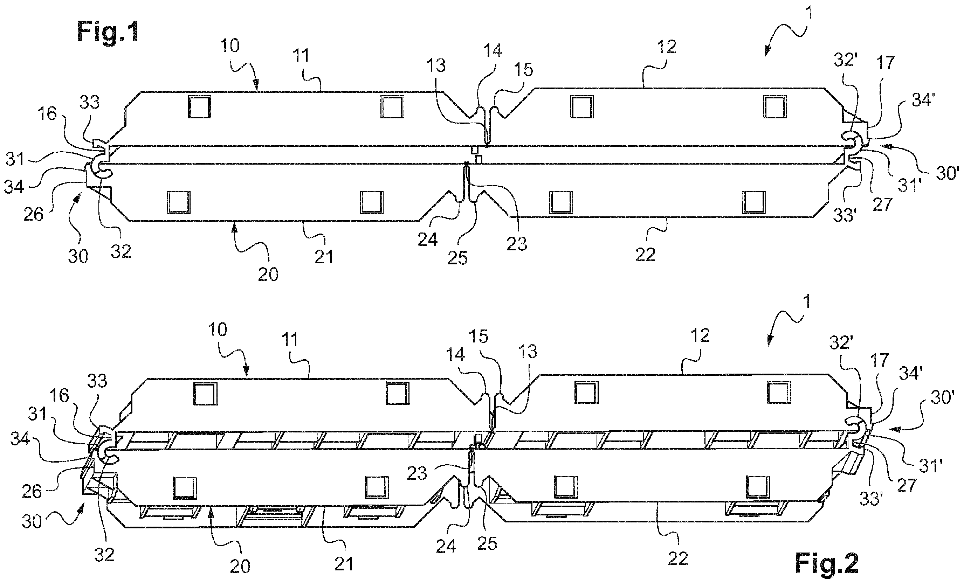

Comme illustré sur les figures 1 et 2, les deux éléments latéraux 10 et 20 sont destinés à être assemblés dans une position à plat, notamment pour le transport. Dans cette position à plat, les deux éléments latéraux 10 et 20 sont donc positionnés en regard l'un contre l'autre avec les bords longitudinaux de leurs parties de paroi respectives 11, 12 et 21, 22 sensiblement alignés. Les deux éléments latéraux 10 et 20 sont maintenus solidarisés entre eux dans cette position à plat par l'intermédiaire des bords transversaux libres de leurs parties de paroi respectives, respectivement 16 et 17 et 26 et 27, disposés deux à deux en vis-à-vis les uns des autres dans cette position à plat et sur lesquels sont prévus des moyens d'accouplement complémentaires 30, 30' destinés à assurer la liaison entre eux des bords latéraux libres disposés en vis-à-vis, respectivement 16 et 26 et 17 et 27 et partant, la solidarisation des deux éléments latéraux 10 et 20 dans la position à plat.

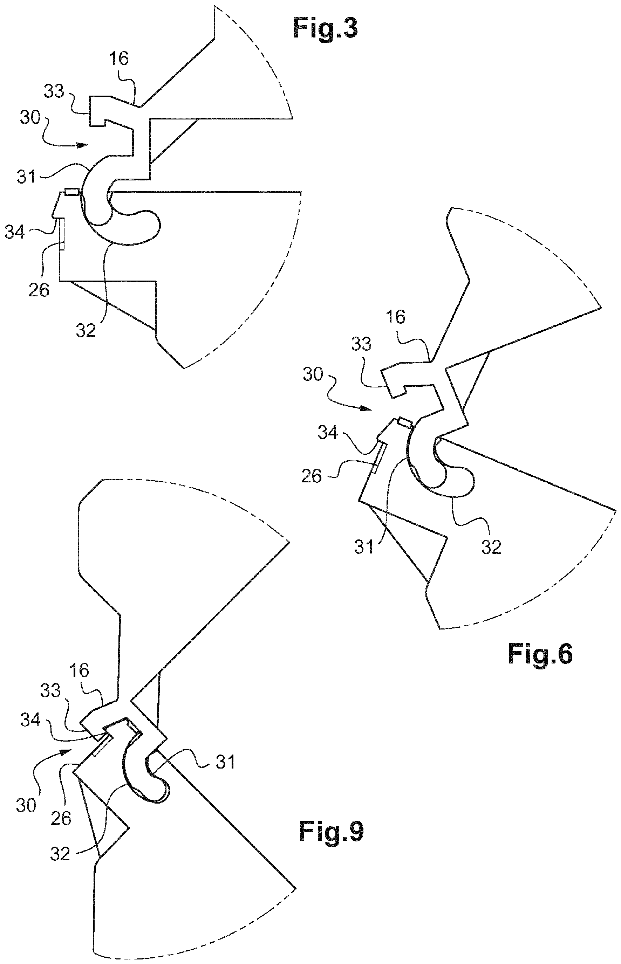

Pour ce faire, selon l'exemple de réalisation de la figure 3 illustrant en détail la liaison entre les deux bords transversaux libres 16 et 26 en vis-à-vis, respectivement du premier et du second élément latéral 10 et 20, les moyens d'accouplement 30 comprennent un épaulement cylindrique 31 qui fait saillie du bord transversal libre 16 du premier élément latéral 10, et une portée cylindrique 32, ménagée sur le bord transversal libre 26 du second élément latéral 20, l'épaulement cylindrique 31 du bord transversal libre 16 du premier élément latéral 10 étant conçu pour pouvoir être inséré dans la portée cylindrique 32 ménagée dans le bord transversal libre 26 du second élément latéral 20, de façon à assurer un couplage des deux éléments latéraux 10 et 20 à plat et pour pouvoir guider la rotation des deux éléments latéraux 10 et 20 autour d'un axe de rotation s'étendant le long de leurs bords transversaux libres respectifs. Bien entendu, un même agencement est prévu au niveau des deux autres bords libres opposés, respectivement 17 et 27 des deux éléments latéraux 10 et 20, disposés en vis-à-vis l'un de l'autre. Ainsi, l'un de ces autres bords transversaux libres, par exemple le bord transversal libre 27, comprend un épaulement cylindrique 31' qui fait saillie tandis que l'autre bord transversal libre en vis-à-vis 17 comprend une portée cylindrique 32', coopérant mêmement.

Ainsi, dans cette position à plat, les deux éléments latéraux 10 et 20 sont maintenus solidaires entre eux. Les liaisons agencées au niveau des bords transversaux adjacents des parties de parois respectives des éléments latéraux 10 et 20 et des bords transversaux libres opposés respectifs des parties de paroi constituent des liaisons pivot d'axe parallèle aux bords transversaux (perpendiculaire au plan de la figure 1) et ces quatre articulations forment un parallélépipède déformable. Le déplacement des parties de paroi respectives des éléments latéraux 10, 20 autour de leur axe de pivotement depuis la position à plat des deux éléments latéraux 10, 20 se traduit par une déformation de ce parallélépipède déformable, les parties de paroi respectives des éléments latéraux se déployant jusqu'à une position finale d'utilisation de la boîte de connexion 1, dans laquelle les parties de paroi respectives des éléments latéraux 10, 20 sont disposées avec leurs bords longitudinaux à 90°, de sorte à former une seule pièce rigide maintenue à l'équerrage.

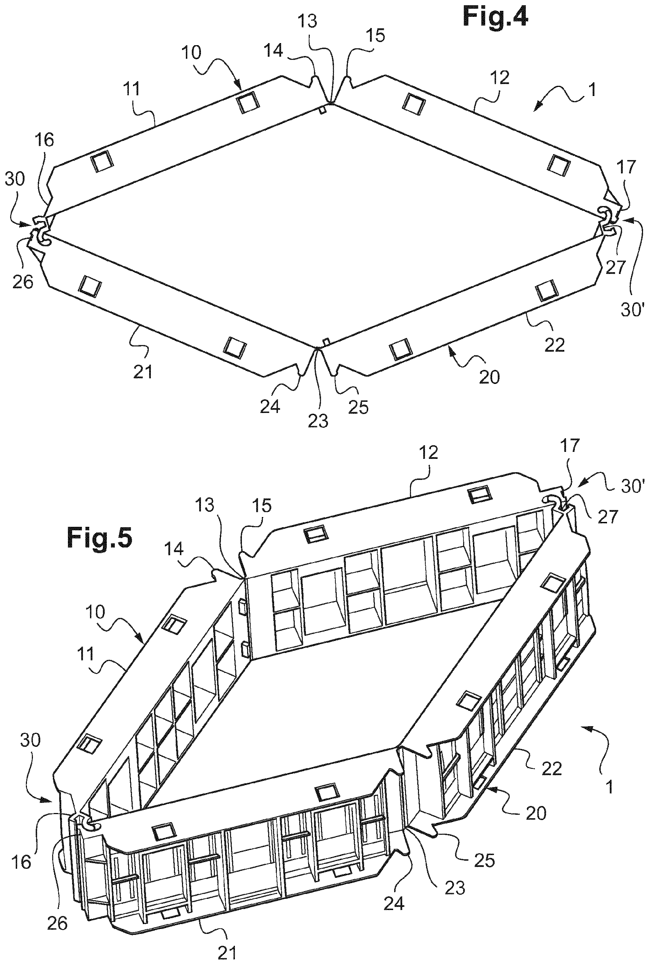

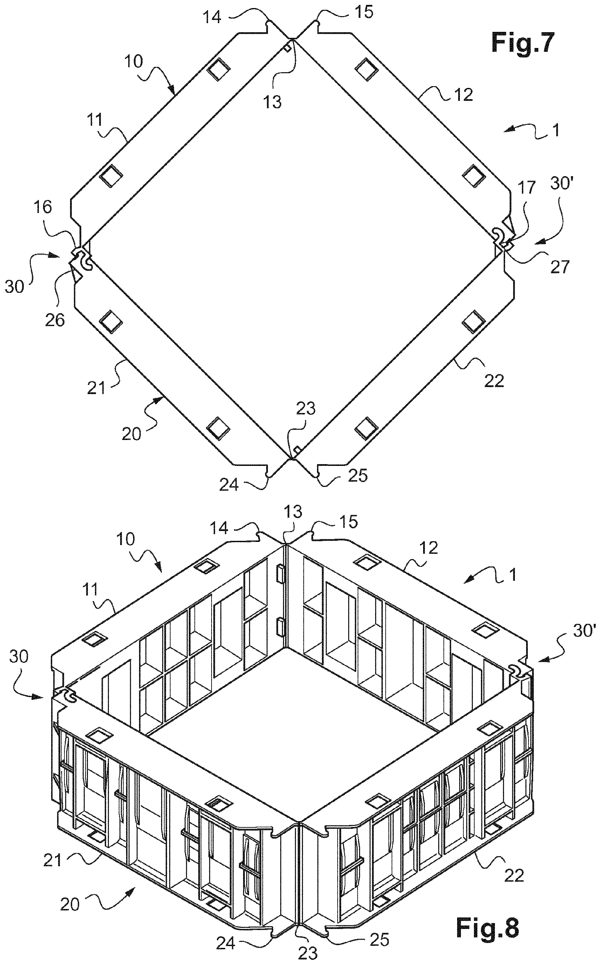

Les figures 4 à 6 illustrent la boîte 1 dans une configuration intermédiaire, en cours de déploiement, tandis que les figures 7 à 9 illustrent la boîte 1 dans la position finale à l'équerrage. Avantageusement, la boîte 1 ainsi formée est bloquée dans la position finale à l'équerrage par l'intermédiaire des moyens d'accouplement 30, 30' agencés sur les bords transversaux libres opposés des parties de paroi respectives des éléments latéraux 10, 20. Pour ce faire, les moyens d'accouplement 30, 30' sont pourvus moyens de verrouillage, par encliquetage élastique, aptes à s'encliqueter élastiquement lorsque la position à l'équerrage des premier et second éléments latéraux 10 et 20 est atteinte, de sorte que les premier et second éléments latéraux 10 et 20 sont bloqués dans cette position. Comme cela est illustré plus en détail notamment à la figure 9, illustrant la liaison entre les deux bords transversaux libres 16 et 26 en vis-à-vis, respectivement du premier et du second élément latéral 10 et 20, ces moyens de verrouillage par encliquetage élastique comprennent, du côté de l'épaulement cylindrique 31, un ergot 33 en saillie et, du côté de la portée cylindrique 32, une cavité de réception 34, l'ergot 33 étant apte à être reçu dans la cavité de réception 34, réalisant l'encliquetage et partant, le verrouillage de l'assemblage des premier et second éléments latéraux 10 et 20 dans la position déployée à l'équerrage. Un agencement similaire est prévu au niveau des deux autres bords libres opposés, respectivement 17 et 27 des deux éléments latéraux 10 et 20, disposés en vis-à-vis l'un de l'autre. Ainsi, un ergot 33' est prévu en saillie du côté de l'épaulement cylindrique 31' agencé sur le bord transversal libre 27 de l'élément latéral 20, et est destiné à être reçu dans une cavité de réception 34' ménagée du côté du bord transversal libre 17 en vis-à-vis de l'autre élément latéral 10, de façon à réaliser mêmement l'encliquetage et le verrouillage de l'assemblage des premier et second éléments latéraux 10 et 20 dans la position déployée à l'équerrage.

## Revendications

1. Boîte (1) de connexion électrique comprenant des parois latérales apte à délimiter un volume interne destiné au raccordement de connecteurs électriques aptes à entrer dans la boîte au travers de passages ménagés dans les parois latérales, les parois latérales comprenant des premier et second éléments latéraux (10, 20) constitués chacun de deux parties de paroi (11, 12, 21, 22) à bords longitudinaux et transversaux articulées l'une par rapport à l'autre par une charnière (13, 23) le long de leur bord transversal adjacent, les bords transversaux libres (16, 17) des parties de paroi (11, 12) du premier élément latéral (10) comportant des moyens d'accouplement adaptés à coopérer de manière démontable avec des moyens d'accouplement complémentaires ménagés sur les bords transversaux libres (26, 27) des parties de parois (21, 22) du second élément latéral (20), de façon à pouvoir assembler les premier et second éléments latéraux (10, 20) par les bords latéraux libres de leurs parties de paroi respectives, **caractérisée en ce que** les moyens d'accouplement sont prévus pour coopérer de façon à solidariser les premier et second éléments latéraux (10, 20) à plat lorsque les parties de paroi respectives (11, 12, 21, 22) des premier et second éléments latéraux (10, 20) sont disposées avec leurs bords longitudinaux sensiblement alignés, et à verrouiller l'assemblage des premier et second éléments latéraux (10, 20) lorsque les parties de paroi respectives (11, 12, 21, 22) des premier et second éléments latéraux (10, 20) sont disposées avec leurs bords longitudinaux sensiblement orthogonaux de sorte à former une seule pièce rigide maintenue à l'équerrage, les moyens d'accouplement comportant des moyens de verrouillage, par encliquetage élastique, aptes à s'encliqueter élastiquement lorsque la position à l'équerrage des premier et second éléments latéraux (10, 20) est atteinte, de sorte que les premier et second éléments latéraux (10, 20) sont bloqués dans cette position.

2. Boîte de connexion selon la revendication 1, **caractérisée en ce que** les moyens d'accouplement (30, 30') sont adaptés pour guider la rotation des deux éléments latéraux (10, 20) autour d'un axe de rotation passant par leurs bords transversaux libres respectifs, depuis la position à plat vers la position à l'équerrage, lors du pivotement des parties de paroi respectives des deux éléments latéraux autour de leur charnière d'articulation (13, 23).

3. Boîte de connexion selon la revendication 2, **caractérisée en ce que** les moyens d'accouplement (30, 30') comprennent, sur chacun des premier et second éléments latéraux (10, 20), au moins un épaulement cylindrique (31, 31') qui fait saillie d'un des deux bords transversaux libres de l'élément latéral correspondant, et une portée cylindrique (32, 32') ménagée sur l'autre des deux bords transversaux libres de l'élément latéral correspondant, l'épaulement cylindrique de l'un des deux éléments latéraux étant apte à être inséré dans la portée cylindrique de l'autre des deux éléments latéraux (10, 20) pour assurer un couplage des deux éléments latéraux à plat et pour guider la rotation des deux éléments latéraux (10, 20).

4. Boîte de connexion selon les revendications 1 et 3, **caractérisée en ce que** les moyens de verrouillage par encliquetage élastique comprennent, d'un côté de l'épaulement cylindrique, un ergot (33) en saillie et, d'un côté de la portée cylindrique, une cavité de réception (34), l'ergot de l'un des deux éléments latéraux étant apte à être reçu dans la cavité de réception de l'autre des deux éléments latéraux.

5. Boîte de connexion selon l'une quelconque des revendications précédentes, **caractérisée en ce que** les parties de paroi des éléments latéraux (10, 20) sont reliées entre elles par une zone de déformation formant charnière élastique venue d'une seule pièce avec les parties de paroi.

6. Boîte de connexion selon l'une quelconque des revendications précédentes, **caractérisée en ce que** les premier et second éléments latéraux (10, 20) constituent chacun une pièce monobloc venue de moulage en une matière plastique.

## Patentansprüche

1. Elektrische Verbindungsdose (1), die seitliche Wandungen umfasst, die dazu geeignet sind, einen Innenvolumen zu begrenzen, das zum Anschließen von elektrischen Verbindern bestimmt ist, die dazu geeignet sind, durch in den seitlichen Wänden ausgebildeten Durchführungen in die Dose zu gelangen, wobei die seitlichen Wände erste und zweite seitliche Elemente (10, 20) umfassen, die jeweils aus zwei Wandteilen (11, 12, 21, 22) bestehen, deren Längs- und Quer-Kanten gelenkig über ein Scharnier (13, 23) entlang ihrer angrenzenden Querkante miteinander verbunden sind, wobei die freien Querkanten (16, 17) der Wandteile (11, 12) des ersten seitlichen Elements (10) Kopplungsmittel beinhalten, die dazu angepasst sind, auf lösbare Weise mit komplementären Kopplungsmitteln zusammenzuwirken, die auf den freien Querkanten (26, 27) der Wandteile (21, 22) des zweiten seitlichen Elements (20) angeordnet sind, sodass die seitlichen Elemente eins und zwei (10, 20) über die freien Querkanten der entsprechenden Wandteile zusammengefügt werden können, **dadurch gekennzeichnet, dass** die Kopplungsmittel vorgesehen werden, um zusammenzuwirken, sodass sie die seitlichen Elemente eins und zwei (10, 20) flächig fest verbinden, wenn die entsprechenden Wandteile (11, 12, 21, 22) der seitlichen Elemente eins und zwei (10, 20) mit ihren Längskanten im Wesentlichen fluchtend angeordnet sind, und sodass die Zusammenfügung der seitlichen Elemente eins und zwei (10, 20) verriegelt wird, wenn die entsprechenden Wandteile (11, 12, 21, 22) der seitlichen Elemente eins und zwei (10, 20) mit ihren Längskanten im Wesentlichen orthogonal angeordnet sind, sodass ein einziges starres Stück gebildet wird, das rechtwinklig gehalten wird, wobei die Kopplungsmittel Mittel zur Verriegelung durch elastisches Einrasten umfassen, die dazu geeignet sind, elastisch einzurasten, wenn die rechtwinklige Position der seitlichen Elemente eins und zwei (10, 20) erreicht ist, sodass die seitlichen Elemente eins und zwei (10, 20) in dieser Position blockiert werden.

2. Verbindungsdose nach Anspruch 1, **dadurch gekennzeichnet, dass** die Kopplungsmittel (30, 30') angepasst sind, um die Rotation der zwei seitlichen Elemente (10, 20) um eine Rotationsachse zu führen, die durch ihre entsprechenden freien Querkanten verläuft, von der flachen Position zur rechtwinkligen Position, während der Schwenkung der entsprechenden Wandteile der zwei seitlichen Elemente um ihr Gelenkscharnier (13, 23).

3. Verbindungsdose nach Anspruch 2, **dadurch gekennzeichnet, dass** die Kopplungsmittel (30, 30') auf jedem der seitlichen Elemente eins und zwei (10, 20) mindestens eine zylindrische Schulter (31, 31') umfassen, die von einem der zwei freien Querkanten des entsprechenden seitlichen Elements vorsteht, und eine zylindrische Auflagefläche (*portée*) (32, 32'), die auf der anderen der zwei freien Querkanten des entsprechenden seitlichen Elements angeordnet ist, wobei die zylindrische Schulter von dem einen der seitlichen Elemente dazu geeignet ist, in die zylindrische Auflagefläche des anderen der seitlichen Elemente (10, 20) eingefügt zu werden, um eine flächige Kopplung der beiden seitlichen Elemente zu gewährleisten, und um die Rotation der zwei seitlichen Elemente (10, 20) zu führen.

4. Verbindungsdose nach Anspruch 1 und 3, **dadurch gekennzeichnet, dass** die Mittel zur Verriegelung durch elastisches Einrasten auf einer Seite der zylindrischen Schulter eine vorspringende Nase (33) umfassen, und, auf einer Seite der zylindrischen Auflagefläche, einen Aufnahme-Hohlraum (34), wobei die Nase von einem der beiden seitlichen Elemente dazu geeignet ist, im Aufnahme-Hohlraum des anderen der zwei seitlichen Elemente empfangen bzw. aufgenommen zu werden.

5. Verbindungsdose nach irgendeinem der vorhergehenden Ansprüche, **dadurch gekennzeichnet, dass** die Wandteile der seitlichen Elemente (10, 20) durch einen Verformungsbereich miteinander verbunden sind, der ein elastisches Scharnier bildet, das mit den Wandteilen einteilig ausgebildet ist.

6. Verbindungsdose nach irgendeinem der vorhergehenden Ansprüche, **dadurch gekennzeichnet, dass** die seitlichen Elemente eins und zwei (10, 20) jeweils ein in einem Kunststoff gegossenes einstückiges Teil bilden.

## Claims

1. An electrical connection box (1) comprising side walls able to delimit an internal volume intended for the connection of electric connectors that can enter within the box through passages arranged in the side walls, the side walls comprising first and second lateral members (10, 20) each consisting in two wall portions (11, 12, 21, 22) with longitudinal and transversal edges being articulated to each other by a hinge (13, 23) along their adjacent transversal edge, the free transversal edges (16, 17) of the wall portions (11, 12) of the first lateral member (10) including coupling means adapted to releasably cooperate with complementary coupling means arranged on the free transversal edges (26, 27) of the wall portions (21, 22) of the second lateral member (20), in order to be able to assemble the first and second lateral members (10, 20) by the free lateral edges of their respective wall portions, **characterized in that** the coupling means are provided to cooperate in order to flatly join the first and second lateral members (10, 20) when respective wall portions (11, 12, 21, 22) of first and second lateral members (10, 20) are arranged with their longitudinal edges substantially aligned, and to lock the assembly of the first and second lateral members (10, 20) when the respective wall portions (11, 12, 21, 22) of the first and second lateral members (10, 20) are arranged with their longitudinal edges substantially orthogonal so as to form only one rigid part maintained at right angle, the coupling means comprising elastic snap-fastening locking means, able to elastically snap-fasten it when the position at right angle of the first and second lateral members (10, 20) is reached, so that the first and second lateral members (10, 20) are blocked in this position.

2. The connection box according to claim 1, **characterized in that** the coupling means (30, 30') are adapted to guide the rotation of the two lateral members (10, 20) about a rotational axis passing through their respective free transversal edges, from the flat position towards the right angle position, when pivoting the respective wall portions of the two lateral members about their articulation hinge (13, 23).

3. The connection box according to claim 2, **characterized in that** the coupling means (30, 30') comprise, on each one of the first and second lateral members (10, 20), at least a cylindrical shoulder (31, 31') that extend from one of the two free transversal edges of the corresponding lateral member, and a cylindrical seat (32, 32') provided on the other of the two free transversal edges of the corresponding lateral member, the cylindrical shoulder of one of the two lateral members being able to be inserted within the cylindrical seat of the other of the two lateral members (10, 20) in order to provide a flat coupling of the two lateral members and to guide the rotation of the two lateral members (10, 20).

4. The connection box according to claims 1 and 3, **characterized in that** the elastic snap-fastening locking means comprises, on a side of the cylindrical shoulder, a protruding pin (33) and, on a side of the cylindrical seat, a receiving cavity (34), the pin of one of the two lateral members being able to be received in the receiving cavity of the other of the two lateral members.

5. The connection box according to any of the preceding claims, **characterized in that** the wall portions of the lateral members (10, 20) are interconnected by a deformation area forming an elastic hinge integrally made with the wall portions.

6. The connection box according to any of the preceding claims, **characterized in that** the first and second lateral members (10, 20) constitute each one a plastic molded one-piece part.
